# EUROPÄISCHE PATENTSCHRIFT

(11) **EP 1 861 242 B1**
(45) Veröffentlichungstag und Bekanntmachung des Hinweises auf die Patenterteilung: **24.12.2008**
(21) Anmeldenummer: 06707465.8
(22) Anmeldetag: 07.03.2006
(51) Int. Cl.: B29C 73/10

(54) **FLICKEN ZUR REPARATURVULKANISATION VON REIFEN**
PATCH FOR REPAIRING TYRES BY VULCANISATION
ELEMENT DE REPARATION SERVANT A VULCANISER DES PNEUS A DES FINS DE REPARATION

(30) Priorität: 08.03.2005 DE 202005003662 U
(43) Veröffentlichungstag der Anmeldung: 05.12.2007
(73) Patentinhaber: Stahlgruber Otto Gruber GmbH & Co. KG, 85586 Poing (DE)
(72) Erfinder: SCHEUNGRABER, Patric, 85652 Pliening (DE)
(74) Vertreter: Beetz & Partner
(86) Internationale Anmeldenummer: PCT/EP2006/002100
(87) Internationale Veröffentlichungsnummer: WO 2006/094775

(56) Entgegenhaltungen:
- DE-A1- 4 000 228
- DE-B- 1 013 981
- DE-B- 1 031 664
- DE-B- 1 101 668
- DE-C- 975 764
- DE-U1- 9 404 755
- US-A- 3 842 886
- US-A1- 2003 183 321

## Beschreibung

Die Erfindung betrifft einen Flicken zur Reparaturvulkanisation von Reifen mit mindestens einer ggf. durch Einlagen verstärkten Deckschicht aus vulkanisiertem Kautschukmaterial, einer dünneren Verbindungsschicht aus unvulkanisiertem vulkanisierbarem Kautschukmaterial, die im Randbereich seitlich über die Deckschicht vorsteht, einer auf der Außenseite der Verbindungsschicht lösbar angeordneten stabilen Schutzfolie und einer die Oberseite der Deckschicht überdekkenden Abziehfolie, die auf dem vorstehenden Randbereich der Verbindungsschicht haftet.

Derartige Flicken oder Pflaster sind seit langem in einer Vielzahl unterschiedlicher Ausführungen bekannt und werden zur Reparatur von Fahrzeugreifen und -schläuchen eingesetzt. Auch nach langen Lagerungszeiten muß die für eine gasdichte dauerhafte Haftung des Flikkens entscheidende Verbindungsschicht aus unvulkanisiertem vulkanisierbarem Kautschukmaterial voll funktionsfähig sein. Um unerwünschte Vulkanisationserscheinungen dieser Verbindungsschicht während der Lagerungszeit zu verhindern, ist diese Verbindungsschicht durch eine formhaltige haftende Schutzfolie vollständig abgedeckt, die u.a. gas- und lichtundurchlässig ist. Unmittelbar vor Gebrauch eines derartigen Pflasters wird diese Schutzfolie von Hand abgezogen. Um diesen Abziehvorgang, insbesondere das Erfassen eines Folienabschnitts, zu erleichtern, weist diese halbsteife Schutzfolie eine Bruchnaht auf. Auch die Oberseite der aus vulkanisiertem Kautschukmaterial bestehenden Deckschicht ist durch eine Schutzfolie abgedeckt, die wesentlich dünner und flexibler als die Schutzfolie der Verbindungsschicht ist und eine transparente gestreckte Thermoplastfolie sein kann. Da die ausvulkanisierte Deckschicht kein Haftvermögen besitzt, wird sie von der dünnen Schutzfolie ohne deren Haftung überspannt, wobei eine durchgehende Haftung der Schutzfolie nur auf dem überstehenden Randbereich der Verbindungsschicht auf noch unvulkanisiertem Kautschukmaterial besteht. Auch diese dünne Schutzfolie muß im Zuge des eigentlichen Reparaturvorgangs abgezogen werden, was mitunter Schwierigkeit bereitet und die Verwendung eines Werkzeugs erfordert.

Die DE 1031664 B betrifft einen Reparaturflicken für Gummi- und gummierte Gegenstände, wie zum Beispiel Kraftfahrzeug- und Fahrradschläuche, wobei ein Hauptkörper aus vulkanisiertem Kautschuk vorgesehen ist und am Hauptkörper eine Klebe- oder Verbindungsschicht angebracht ist, die sich im Wesentlichen über den Außenumfang des Hauptkörpers erstreckt. Weiterhin ist eine Schutzschicht über der Klebe- oder Verbindungsschicht vorgesehen, wobei über dieser eine Deckschicht vorgesehen ist, zur Gewährleistung eines faltenlosen Aufbringens des Flickens auf dem zu reparierenden Gegenstand.

Die DE 975764 C betrifft einen weiteren Reparaturflicken mit einem zackenförmigen Rand.

Die DE 1013981 B betrifft einen weiteren Reparaturflicken, wobei eine unvulkanisierte Verbindungsschicht an ihren Randseiten wulstartig ausgebildet ist.

Die US 2003/183321 A1 betrifft einen weiteren Reparaturflicken, der eine Schlaufe mit einzelnen Schichten zeigt, die teilweise aus elastischem vulkanisierten Gummimaterial gebildet sind.

Die DE 9404755 U1 betrifft einen Reparaturflicken mit einer in einem Randbereich vorgesehenen Lasche, die eine Öffnung zur Befestigung an einem Träger aufweist.

Aufgabe der Erfindung ist es, den Abziehvorgang der die Deckschicht überdeckenden dünnen Schutzfolie zu erleichtern.

Diese Aufgabe wird erfindungsgemäß dadurch gelöst, daß die die Deckschicht und den vorstehenden Rand der Verbindungsschicht abdekkende Schutzfolie ein Greifelement zum Abziehen der Schutzfolie aufweist. Dieses Greifelement besteht zweckmäßigerweise aus einer im mittleren Bereich des Flickens vorgesehenen Falte dieser Schutzfolie, die mit zwei Fingern einer Hand ergriffen werden kann.

Die Erfindung eignet sich zur Anwendung bei unterschiedlichen Flicken und Pflastern für die Reparatur von Schläuchen, Reifen, Förderbändern und anderen Kautschuk- bzw. Gummiartikeln. Die erfindungsgemäße Ausbildung der dünnen Schutzfolie mit mindestens einer Griff-Falte führt zu einer kostenneutralen Vereinfachung und einer Effektivierung der fertigungstechnischen Arbeitsvorgänge. Das Entfernen der dünnen Schutzfolie im Zuge der Reparaturausführung, insbesondere nach dem Anrollen des Reparaturkörpers, wird optimiert, ohne daß während der Lagerung oder des Transports der Flicken sich die Folie eigenständig löst. Zum Abziehen der Folie sind keine zusätzlichen Werkzeuge erforderlich. Die vorzugsweise im mittleren Bereich vorgesehen Griff-Falte gewährleistet eine vollständige und rißfreie Ablösung der Schutzfolie quasi mit nur einem Handgriff, ohne daß Folienreste auf der Deckschicht bzw. dem vorstehenden haftenden Rand der Verbindungsschicht verbleiben.

Im folgenden werden Ausführungsbeispiele des erfindungsgemäßen Flickens anhand der Zeichnung im einzelnen beschrieben. Es zeigen:
- Fig. 1: ein Pflaster zur Reparatur von Reifen in vergrößertem Quer- schnitt;
- Fig. 2: ein zur Reparatur von Stichverletzungen eines Luftreifens ge- eignetes Reparaturpflaster mit Fülldorn in vergrößertem Quer- schnitt.

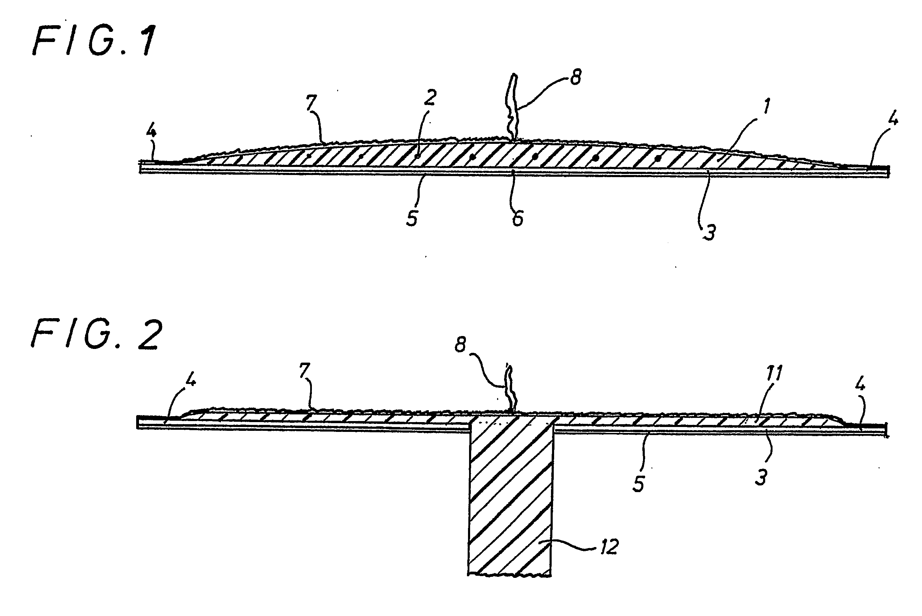

Das in Fig. 1 im Querschnitt dargestellte Reparaturpflaster weist eine allmählich zur Mitte hin dicker werdende Deckschicht 1 auf, die in ihrem mittleren Bereich gegebenenfalls durch eine Einlage 2 verstärkt ist, welche hier aus parallelen Fäden aus Kunststoff, Textil, oder einem geeigneten Metall sowie Kombinationen dieser Materialien besteht. Die Einlage kann auch eine gitter- bzw. gewebeartige Struktur haben. Die Deckschicht 1 besteht aus einem durchvulkanisierten Kautschukmaterial und kann aus mehreren durch Vulkanisation fest miteinander verbundenen Lagen aufgebaut sein. Die Deckschicht 1 kann insgesamt oder in bestimmten Lagen aus unvulkanisiertem vulkanisierbarem Kautschukmaterial bestehen, das erst im Zuge oder nach der Reparaturausführung ausvulkanisiert. An der Unterseite der Deckschicht 1 haftet durchgehend eine Verbindungsschicht 3, die aus einem unvulkanisierten vulkanisiserbaren Kautschukmaterial besteht und allseitig in ihrem Randbereich 4 über die Umfangskante der Deckschicht 1 vorsteht. Die Außenseite dieser Verbindungsschicht 3 ist von einer durchgehend haftenden Schutzfolie 5 abgedeckt, in welcher eine vorgeformte Bruchlinie 6 ausgebildet ist. Diese Schutzfolie 5 besteht aus einem vorzugsweise farbigen gasdichten thermoplastischen Kunststoff und verhindert unbeabsichtigte Vulkanisationsvorgänge der Verbindungsschicht 3, um deren Funktionsfähigkeit auch nach langen Lagerungszeiten aufrechtzuerhalten. Die Oberseite der Deckschicht 1 ist durch eine dünne Schutzfolie 7 abgedeckt, die auf der Oberfläche der Deckschicht 1 lose aufliegt und auf dem gesamten Umfangsrand 4 der Verbindungsschicht 3 haftet. Diese extrem dünne und entsprechend flexible Folie 7 besteht bei dem dargestellten Ausführungsbeispiel aus einem durchsichtigen bzw. transparenten thermoplastischen Kunststoff. Wenn die Deckschicht 1 aus bis zum Zeitpunkt der Reparaturausführung unvulkanisiertem vulkanisierbarem Kautschukmaterial besteht, sollte die Schutzfolie 7 ähnliche Eigenschaften wie die der Verbindungsschicht 3 zugehörige Schutzfolie 5 haben, damit vorzeitige Vulkanisationsvorgänge in der Deckschicht 1, z.B. während der Lagerung, vermieden werden.

Um das Abziehen der Folie vor Gebrauch des dargestellten Flickens zu erleichtern, weist diese Folie 7 eine Griff-Falte 8 auf, die bei dem dargestellten Ausführungsbeispiel im mittleren Bereich des Flickens angeordnet ist und sich durchgehend bis zu den gegenüberliegenden Randbereichen 4 der Verbindungsschicht erstrecken kann. Während der Lagerung der Flicken ist diese Griff-Falte 8 aufgrund der Flexibilität der Folie 7 umgeklappt und erstreckt sich in etwa parallel zu den angrenzenden Folienbereichen. Zum Abziehen der Folie 7 wird die Griff-Falte etwa in die dargestellte Position gebracht, und durch Fingerzug an dieser Griff-Falte kann die Schutzfolie 7 ohne Rißbildung abgezogen werden, wobei die ja lediglich am Randbereich vorhandene Haftung mit der haftfähigen Verbindungsschicht gelöst wird.

Der in Fig. 2 dargestellte Flicken entspricht im wesentlichen dem Flikken nach Fig. 1. Unterschiedlich ist lediglich die Ausführung der Deckschicht 11, die hier eine durchgehend gleiche Dicke hat und mit einem zentralen Dorn 12 einteilig ausgebildet ist. Die weiteren Einzelteile entsprechen den Bauteilen der Fig. 1 und sind mit gleichen Bezugszeichen versehen. Die Deckschicht 11 kann auch eine vom Zentrum nach außen hin abnehmende Dicke entsprechend der Deckschicht 1 in Fig. 1 haben und zusammen mit dem schaftartigen Dorn 12 aus bereits vulkanisiertem oder aus unvulkanisiertem vulkanisierbarem Kautschukmaterial bestehen.

Ein wesentlicher Vorteil der erfindungsgemäßen Flicken besteht darin, daß das Abziehen der Schutzfolie 7 wesentlich erleichtert wird, ohne daß dadurch die Herstellungskosten für einen derartigen Flicken merkbar ansteigen. Die Form der Schutzfolie entspricht nach wie vor der Kontur der Verbindungsschicht, so daß der Außenrand der Schutzfolie mit dem überstehenden haftenden Außenrand der Verbindungsschicht übereinstimmt. Lediglich die Größe der Schutzfolie muß etwas größer als die der Verbindungsschicht gewählt werden, so daß sich aufgrund ihrer Haftung im Bereich des Umfangsrandes die Griff-Falte von selbst einstellt.

Die erfindungsgemäß ausgebildete Schutzfolie kann auch bei anderen Gummiartikeln eingesetzt werden, die einen Rand aus einem unvulkanisierten und damit klebfähigen Material besitzen.

## Patentansprüche

1. Flicken zur Reparaturvulkanisation von Reifen, Schläuchen od. dgl., mit
- mindestens einer Deckschicht (1) aus vulkanisiertem Kautschukmaterial,
- einer Verbindungsschicht (3) aus Kautschukmaterial, die im Randbereich (4) seitlich über die Deckschicht (1) vorsteht,
- einer die Oberseite der Verbindungsschicht (3) abdeckenden Schutzfolie (5) und
- einer dünnen flexiblen Abziehfolie (7), welche auf der Oberfläche der Deckschicht (1) lose aufliegt und auf dem vorstehenden Rand (4) der Verbindungsschicht (3) haftet,
**dadurch gekennzeichnet, dass**
- die die Deckschicht (1) und den vorstehenden Rand (4) der Verbindungsschicht (3) abdeckende Abziehfolie (7) ein Greifelement zum Abziehen dieser Folie (7) aufweist und das Greifelement eine im mittleren Bereich des Flickens vorgesehene Griff-Falte (8) der Abziehfolie (7) ist.

2. Flicken nach Anspruch 1,
**dadurch gekennzeichnet, dass**
die Deckschicht (1) durch Einlagen (2) verstärkt ist.

3. Flicken nach Anspruch 1 oder 2,
**dadurch gekennzeichnet, dass**
die Schutzfolie (5) die Oberseite der Verbindungsschicht (3) durchgehend abdeckt.

4. Flicken nach zumindest einem der Ansprüche 1 bis 3,
**dadurch gekennzeichnet, dass**
an der Deckschicht (11) ein abstehender Reparaturdorn (12) angeformt ist.

5. Flicken nach zumindest einem der Ansprüche 1 bis 4, **dadurch gekennzeichnet, dass**
die Verbindungsschicht (3) aus einem unvulkanisierten und vulkanisierbaren Kautschukmaterial gebildet ist.

## Claims

1. A patch for repair vulcanization of tires, tubes or the like, comprising
- at least one covering layer (1) of vulcanized rubber material,
- a connection layer (3) of rubber material protruding laterally beyond said covering layer (1) in its boundary area,
- a protection film (5) covering the upper face of said connection layer (3) and
- a thin flexible peal-off film (7) loosely laying on the surface of said covering layer (1) and adhering to said protruding boundary (4) of said connection layer (3),
**characterized in that**
- said peal-off film (7) covering both said covering layer (1) and said protruding boundary (4) of said connection layer (3) comprises a grip element for pealing-off said film (7) and said grip element is a grip fold (8) of said peal-off film (7) provided in the central area of said patch.

2. The patch according to claim 1,
**characterized in that**
said covering layer (1) is reinforced by inserts (2).

3. The patch according to claim 1 or 2,
**characterized in that**
said protective film (5) continuously covers the upper face of said connection layer (3).

4. The patch according to at least one of the claims 1 to 3,
**characterized in that**
on said covering layer (11) a repair mandrel (12) standing away therefrom is formed.

5. The patch according to at least one of the claims 1 to 4,
**characterized in that**
said connection layer (3) is formed of both a non-vulcanized and a vulcanized rubber material.

## Revendications

1. Rustine pour la réparation par vulcanisation de pneumatiques, flexibles ou éléments similaires, se composant :
- d'au moins une couche de recouvrement (1) en caoutchouc vulcanisé,
- d'une couche de liaison (3) en caoutchouc qui, au niveau de sa zone périphérique (4) fait latéralement saillie au-dessus de la couche de recouvrement (1),
- d'une pellicule de protection (5) recouvrant la surface supérieure de la couche de liaison (3) et
- d'une mince pellicule décollable souple (7), qui est placée telle quelle sur la surface de la couche de recouvrement (1) et qui adhère sur le bord (4) faisant saillie de la couche de liaison (3),
**caractérisée en ce que**
- la pellicule décollable (7), recouvrant la couche de recouvrement (1) et le bord faisant saillie (4) de la couche de liaison (3), comporte un élément de préhension pour arracher cette pellicule (7) et l'élément de préhension consiste en un repli de préhension (8) ménagé dans la portion centrale de la rustine.

2. Rustine selon la revendication 1,
**caractérisée en ce que**
la couche de recouvrement (1) est renforcée au moyen de couches de protection intermédiaires (2).

3. Rustine selon la revendication 1 ou 2,
**caractérisée en ce que**
la pellicule de protection (5) recouvre complètement la face supérieure de la couche de liaison (3).

4. Rustine selon au moins une des revendications 1 à 3,
**caractérisée en ce que**
un mandrin de réparation (12) en saillie est réalisé par formage solidaire de la couche de recouvrement (1).

5. Rustine selon au moins une des revendications 1 à 4,
**caractérisée en ce que**
la couche de liaison (3) est réalisée en caoutchouc non vulcanisé et vulcanisable.
